# EUROPEAN PATENT SPECIFICATION

(11) **EP 1 141 869 B1**
(45) Date of publication and mention of the grant of the patent: **25.06.2008**
(21) Application number: 00900845.9
(22) Date of filing: 20.01.2000
(51) Int. Cl.: H04L 12/28, H04N 7/14, H04L 12/58

(54) **Electronic mail advertisement system and relay device**
E-Mail-Werbesystem und Relay-Gerät
Système de publicité dans le courrier electronique et dispositif relais

(30) Priority: 22.01.1999 JP 1484099; 24.11.1999 JP 33245999
(43) Date of publication of application: 10.10.2001
(73) Proprietor: Sony Computer Entertainment Inc., Tokyo 107-0052 (JP)
(72) Inventor: KAWAI, Eiji, Sony Computer Entertainment Inc., Tokyo 107-0052 (JP); ITO, Takeshi, Sony Computer Entertainment Inc., Tokyo 107-0052 (JP)
(74) Representative: Turner, James Arthur
(86) International application number: PCT/JP2000/000261
(87) International publication number: WO 2000/044151

(56) References cited:
- WO-A-96/24213
- WO-A-97/10558
- WO-A-97/25820
- WO-A-97/40514
- US-A- 5 493 692

## Description

### Technical Field

The present invention relates to an electronic mail advertisement system and a relay device which use a public network as a communication infrastructure to provide new services in exchanging messages between interconnected terminals.

The present invention is also concerned with a bidirectional real-time communication advertisement system which uses a public network as a communication infrastructure to provide new services when a sender and a receiver perform real-time communications using terminals that bidirectionally communicate with each other to transmit at least image data therebetween, as with a video telephone system or the like.

### Background Art

Portable telephone systems, PHS (Personal Handyphone System), and electronic mail (e-mail) systems are finding growing use as communication means for establishing connections between two stations via a public network, i.e., point-to-point connections.

In order for a user to receive services of such a system, the user usually needs to pay a fixed charge per month and, in addition, an access charge (communication charge) each time they access the system.

Recently, the Internet has been seeing the advent of banner advertisements on WWW (World-Wide Web) pages and electronic mail advertisements using electronic mail magazines. The WWW pages and the electronic mail magazines are drawing much attention as new advertisement mediums on the Internet.

However, because those who see banner advertisements and electronic mail advertisements on electronic mail magazines are limited to personal computer users, the new advertisement mediums fail to be more noticeable to general consumers than conventional advertisement mediums such as direct mail, etc.

It is therefore an object of the present invention to provide an electronic mail advertisement system which makes it possible to attach advertisement data to electronic mail that is highly noticeable.

WO 96/24213 discloses a system for providing free email to members of an interconnected e-mail system. The system sends an email comprising at least two visible portions to a subscriber. A first portion includes information that is to be communicated from the message originator, privately and unmodified, to the receiver of the email and second portion includes information about sponsor supplied advertising.

### Disclosure of Invention

Various respective aspects and features of the invention are defined in the appended claims.

According to the present invention, an electronic mail advertisement system according to claim 1, and a relay device according to claim 9 are provided.

With the above arrangement, advertisement data can be added to highly noticeable electronic mail data sent to the receiver's terminal.

The relay device sends either the electronic mail data and the advertisement data added thereto or the advertisement data to the sender's terminal while the sender's terminal is being connected to the public network for sending electronic mail. Therefore, advertisement data can also be added to highly noticeable electronic mail data sent to the sender's terminal.

The sender's terminal may add display format information of the sender's terminal to the electronic mail data, and send the electronic mail data and the display format information added thereto as electronic mail data with the display format information. The relay device may extract advertisement data depending on the display format information from the database.

The public network may have a plurality of base stations having respective databases and relay devices for accessing the databases, respectively. The base station which handles a sender's terminal may send electronic mail data sent from the sender's terminal via the public network to the base station which handles a receiver's terminal. The relay device of the base station which handles the receiver's terminal may add advertisement data from the database to the electronic mail data and send the electronic mail data and the advertisement data added thereto from the base station which handles the receiver's terminal to the receiver's terminal. With this arrangement, no undue burden is imposed on the public network.

The relay device of the base station which handles the sender's terminal may send either the electronic mail data and the advertisement data added thereto or the advertisement data to the sender's terminal.

The sender's terminal may add display format information of the sender's terminal to the electronic mail data, and sending the electronic mail data and the display format information added thereto as electronic mail data with the display format information, and each of the relay devices may extract advertisement data depending on the display format information from the corresponding database.

A bidirectional real-time communication advertisement system according to the present invention comprises a public network having a database and a relay device for accessing the database, and a sender's terminal and a receiver's terminal for transmitting at least image data bidirectionally via the public network. The relay device adds advertisement data from the database to image data sent from the sender's terminal, and sends the image data and the advertisement data added thereto to the receiver's terminal. The receiver's terminal allows the receiver to view an image sent from the sender's terminal and also an advertisement.

The relay device may add advertisement data from the database to image data sent from the receiver's terminal, and send the image data and the advertisement data added thereto to the sender's terminal. The sender's terminal allows the sender to view an image sent from the receiver's terminal and also an advertisement.

The public network may have a plurality of exchanges having respective databases and relay devices for accessing the databases, respectively. The exchange which handles the sender's terminal may send image data sent from the sender's terminal via the public network to the exchange which handles the receiver's terminal. The relay device of the exchange which handles the receiver's terminal may add advertisement data from the database to the image data and send the image data and the advertisement data added thereto from the exchange which handles the receiver's terminal to the receiver's terminal. With this arrangement, no undue burden is imposed on the public network.

The sender's terminal may add display format information of the sender's terminal to the image data, and send the image data and the display format information added thereto as electronic mail data with the display format information. Each of the relay devices may extract advertisement data depending on the display format information from the corresponding database.

The above and other objects, features, and advantages of the present invention will become more apparent from the following description when taken in conjunction with the accompanying drawings in which preferred embodiments of the present invention are shown by way of illustrative example.

### Brief Description of Drawings

FIG. 1 is a schematic diagram of an electronic mail advertisement system according to an embodiment of the present invention;
FIG. 2 is a block diagram showing an electric arrangement of a terminal used in the electronic mail advertisement system shown in FIG. 1;
FIG. 3 is a front elevational view of the terminal;
FIG. 4 is a flowchart of an operation sequence of the electronic mail advertisement system;
FIG. 5A is a diagram showing details of electronic mail data sent from a sender's terminal
FIG. 5B is a diagram showing details of electronic mail data sent from a relay device;
FIG. 5C is a diagram showing details of electronic mail data received by a receiver's terminal;
FIG. 6 is a view showing a displayed image for mail preparation;
FIG. 7 is a diagram showing display format bits;
FIG. 8 is a schematic diagram showing electronic mail flows between the sender's terminal, the relay device, and the receiver's terminal in the electronic mail advertisement system;
FIG. 9 is a view showing an image displayed on the receiver's terminal;
FIG. 10 is a view showing an image displayed on the sender's terminal;
FIG. 11 is a schematic diagram of an electronic mail advertisement system according to another embodiment of the present invention;
FIG. 12 is a block diagram of a bidirectional real-time communication advertisement system according to an embodiment of the present invention;
FIG. 13 is a block diagram showing an electric arrangement of a terminal used in the bidirectional real-time communication advertisement system illustrated in FIG. 12;
FIG. 14A is a diagram showing details of video telephone data sent from a terminal;
FIG. 14B is a diagram showing details of video telephone data sent from a relay device; and
FIG. 15 is a block diagram of a bidirectional real-time communication advertisement system according to another embodiment of the present invention.

### Best Mode for Carrying Out the Invention

Like or corresponding parts are denoted by like or corresponding reference characters throughout views.

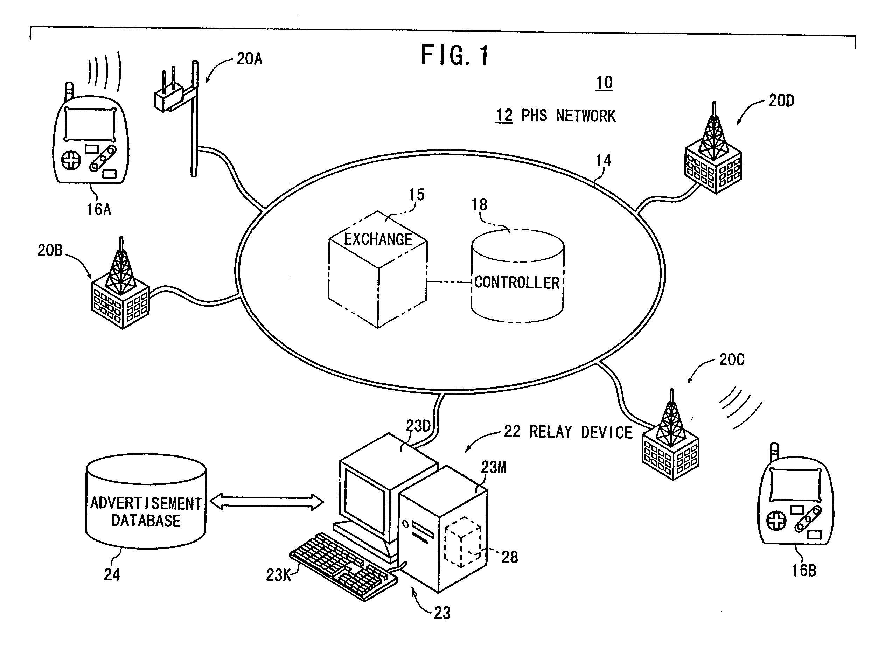

FIG. 1 schematically shows an electronic mail advertisement system 10 according to an embodiment of the present invention.

In FIG. 1, the electronic mail advertisement system 10 uses a public network, i.e., a PHS network 12, as a communication infrastructure. The public network is not limited to the PHS network 12, but may be an analog public circuit network (so-called telephone network), a mobile communication network which uses mobile telephone terminals, an ISDN, a CATV network, or a satellite circuit.

As shown in FIG. 1, the PHS network 12 has a circuit 14, which is schematically illustrated, including an exchange 15 and a controller 18. To the circuit 14, there are connected a plurality of (four in FIG. 1) base stations 20A, 208, 20C, 20D (also collectively referred to as "20").

In combination with the PHS network 12 composed of the exchange 15, the controller 18, the circuit 14, and the base stations 20, there are used two electronic mail terminals (sender's/receiver's terminals) 16A, 16B (also collectively referred to as "16") which comprise PHS terminals. In FIG. 1, the electronic mail terminal 16A serves as a sender's terminal 16A, and the electronic mail terminal 16B serves as a receiver's terminal 16B.

Each of the sender's/receiver's terminals 16 comprises a portable information terminal in the form of a PHS terminal, and can be moved around for use by the user. Each of the sender's/receiver's terminals 16 exchange a control signal with a closest base station 20 at all times to indicate its own location to the controller 18. The receiver's terminal 16B may comprise a pager having a signal reception capability only.

A relay device 22 as an access point which comprises a host computer 23 as a control means is connected to the circuit 14 of the PHS network 12. To the relay device 22, there is connected an advertisement database (a collection of advertisement data) 24 as a data storage means that is accessible by the relay device 22. The advertisement database 24 can be updated by the host computer 23 based on the demand from an advertiser or a guidance information provider supplied via the PHS network 12.

The host computer 23 comprises a keyboard 23K as an input means, a computer unit 23M having a memory 28 as a nonvolatile memory means such as a flash memory, a hard disk, or the like, and a display unit 23D.

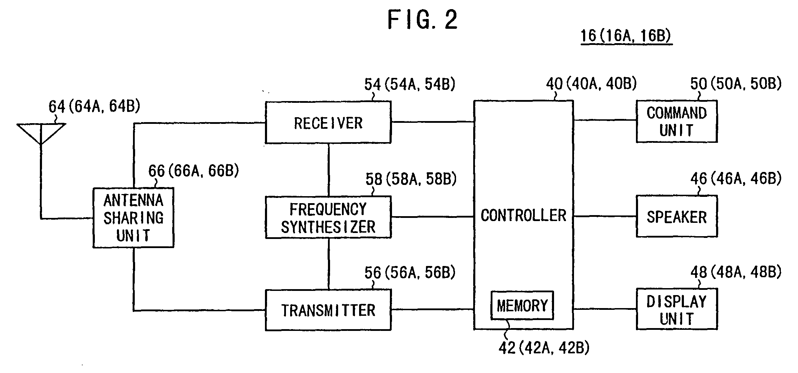

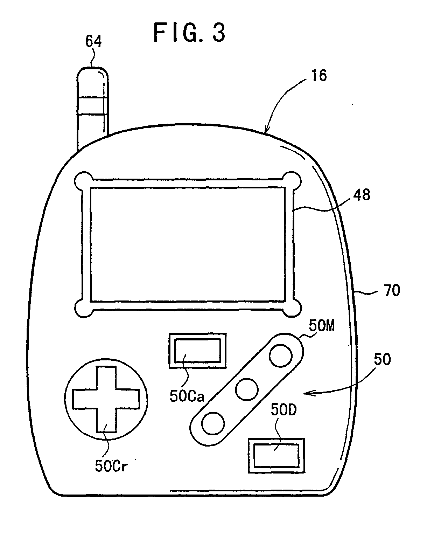

FIG. 2 shows in block form a basic electric arrangement of each of the sender's/receiver's terminals 16 as electronic mail terminals of the electronic mail advertisement system 10. FIG. 3 shows each of the sender's/receiver's terminals 16 in front elevation. Each of the sender's/receiver's terminals 16 comprises a PHS terminal which is specially designed as a dedicated terminal for preparing and displaying electronic mail.

As shown in FIG. 2, the sender's/receiver's terminal 16 has a controller 40 comprising a microcomputer which includes an MPU corresponding to a CPU and a memory 42 as a nonvolatile memory means such as a flash memory.

To the controller 40, there are connected, as human interfaces, a command unit 50 having command switches, a speaker 46, and a display unit 48 comprising a color liquid crystal display unit.

As shown in FIG. 3, the command unit 50 has a cross key 50Cr for selecting characters for the preparation of electronic mail messages, a decision key 50D, a cancel key 50Ca, and a mode changing key 50M. These keys are keys with composite functions, and can function as an on-hook key, an off-hook key, or a power supply key (power supply on/off keys). However, a power supply key should preferably be provided independently. An electronic mail message prepared on the terminal 16 is temporarily stored in the memory 42 shown in FIG. 2.

As shown in FIG. 2, the sender's/receiver's terminal 16 includes a receiver 54, connected to the controller 40, for receiving a radio wave (RF signal) containing electronic mail data from an antenna 64 via an antenna sharing unit 66, converting the RF signal into an intermediate-frequency signal, demodulating the intermediate-frequency signal, and outputting the demodulated signal as received electronic mail data to the controller 40. The controller 40 monitors the receiver 54 for a signal at constant periodic intervals, controls the receiver 54 to receive a signal when an electronic mail message is transmitted, and controls the display unit 48 to display the electronic mail message.

The sender's/receiver's terminal 16 also includes a transmitter 56, connected to the controller 40, for modulating electronic mail data read from the memory 42, changing the modulated electronic mail data from an intermediate-frequency signal to an RF signal, and radiating the RF signal via the antenna sharing unit 66 as a radio wave from the antenna 64.

A frequency synthesizer 58 for outputting a local frequency for a mixer in each of the receiver 54 and the transmitter 56 is also connected to the controller 40.

The sender's/receiver's terminal 16 also has a power supply circuit (not shown) for supplying electric energy to the various circuits therein, and a cell (not shown), e.g., a secondary cell, for supplying electric energy to the power supply circuit.

As shown in FIG. 3, the sender's/receiver's terminal 16 has a casing 70 which is substantially of an elliptical shape with a flat bottom. The casing 70 supports thereon the command unit 50 (the keys 50Ca, 50Cr, 50D and 50M), the display unit 48, and the antenna 64 that is extensible and contractible. Actually, the sender's/receiver's terminal 16 is of a thin, flat configuration and has a size substantially equal to or smaller than a palm of the user's hands, as viewed in front elevation.

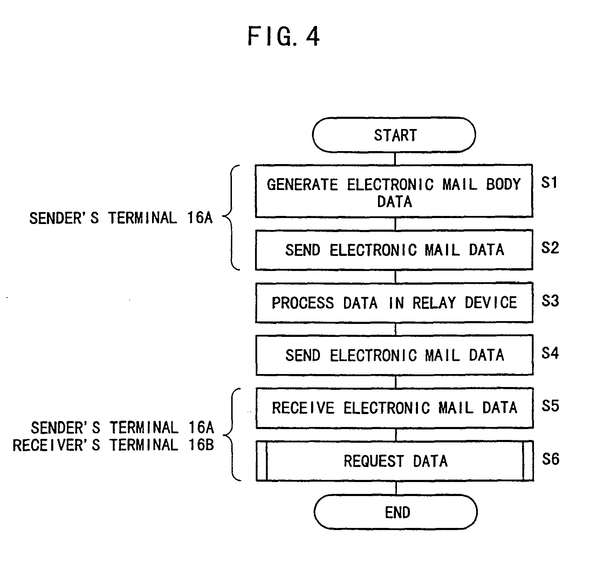

Operation of the electronic mail advertisement system 10, which is substantially of the above structure, will be described below with reference to an operation sequence shown in FIG. 4.

In this embodiment, it is assumed that an electronic mail message is to be sent from the sender's/ receiver's terminal 16A, which is carried by Taro, the sender, to the sender's/receiver's terminal 16B, which is carried by Hanako, the receiver.

For an easier understanding, the sender'/receiver's terminal 16A will be referred to as a sender's terminal 16A, the sender's/receiver's terminal 16B as a receiver's terminal 16B, the display unit 48 of the sender's terminal 16A as a display unit 48A, and the display unit 48 of the receiver's terminal 16B as a display unit 48B. Similarly, other components of the sender's terminal 16A are denote by their reference numerals with a suffix "A", and other components of the sender's terminal 16B are denoted by their reference numerals with a suffix "B".

In step S1 shown in FIG. 4, the command unit 50 is operated to generate electronic mail body data 104.

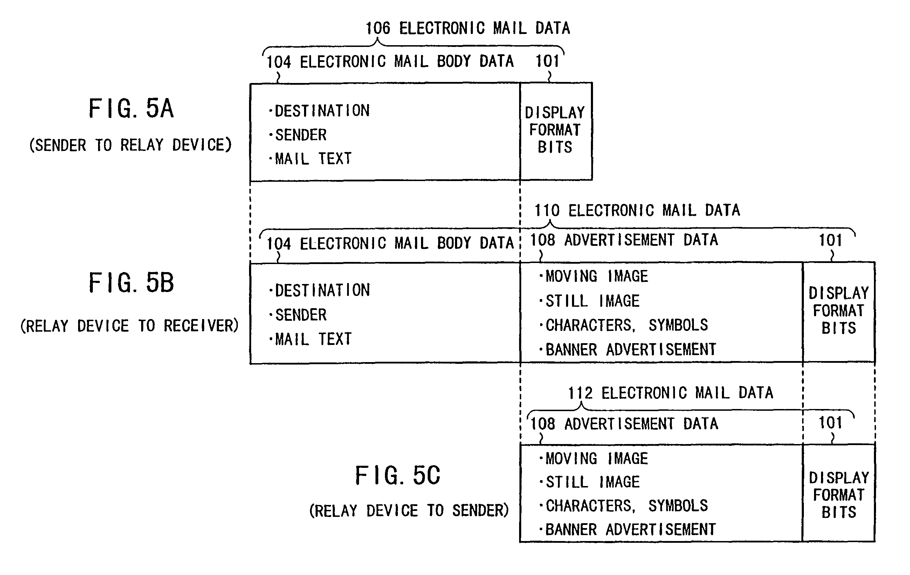

As shown in FIG. 5A, the electronic mail body data 104 includes a destination (an electronic mail address and the receiver's name, Hanako, read from the electronic mail address), a sender (Taro that is automatically attached), and a mail text (e.g., "Tomorrow's meeting spot will be changed to the west exit").

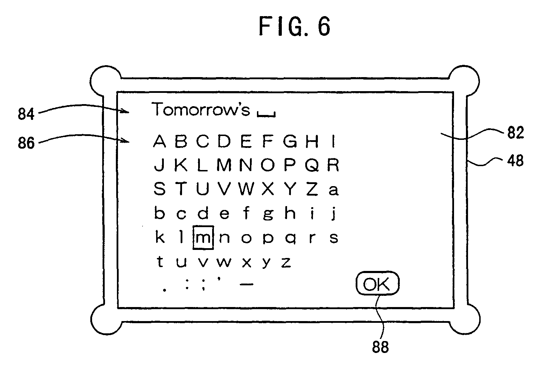

To prepare the mail text, an image 82 for mail preparation is displayed on the screen of the display unit 48A, as shown in FIG. 6. The displayed image 82 includes a mail text display section 84, an alphabetical character display section 86, and an OK (approval) display section 88. The sender operates the cross key 50Cr of the command unit 50 to select a character from the alphabetical character display section 86, and operates the decision key 50D to enter the selected character into the mail text display section 84. To cancel an entered character, the sender operates the cancel key 50Ca. The mode changing key 50M is used to switch between a mode to enter the alphanumeric characters and a mode to enter special symbols.

To the electronic mail body data 104, which includes the mail text thus prepared, there are automatically added display format bits 101, as shown in FIG. 5A. The electronic mail body data 104 and the display format bits 101 added thereto jointly make up electronic mail data 106 which is stored in the memory 42. The electronic mail data 106 is also referred to as electronic mail data 106 with a display format.

Thereafter, the sender selects the OK display section 88 with the cross key 50Cr and decides on the OK display section 88 with the decision key 50D for thereby entering a key command for sending the mail text. The electronic mail data 106 which is stored in the memory 42 is now sent from the transmitter 56 via the antenna sharing unit 66 to the antenna 64, from which it is radiated as a radio wave, in step S2.

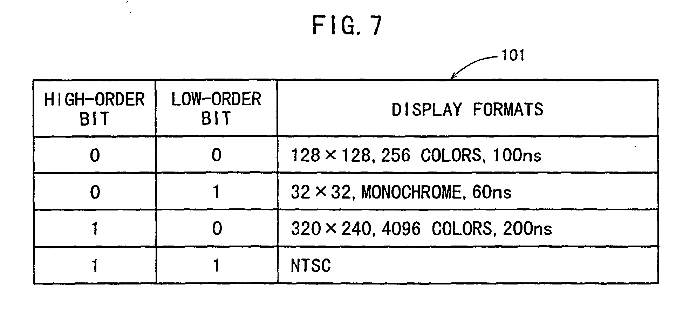

The display format bits 101 represent a display format for the display unit 48A of the sender's terminal 16A. In this embodiment, as shown in FIG. 7, the display format bits 101 include a high-order bit and a low-order bit which, in combination, represent one of four display formats.

Specifically, the display format bits 101 = "00" represent a display format having 128 × 128 pixels, 256 display colors, and a display rate of 100 ns.

The display format bits 101 = "01" represent a display format having 32 × 32 pixels, monochromatic display colors, and a display rate of 60 ns.

The display format bits 101 = "10" represent a display format having 320 × 240 pixels, 4096 display colors, and a display rate of 200 ns.

The display format bits 101 = "11" represent an NTSC display format.

Since the sender's/receiver's terminals 16 are designed to send and receive electronic mail via the relay device 22, an identification number representing the address of the host computer 23 of the relay device 22 is automatically inserted into a header (not shown) of the electronic mail data 106.

When the electronic mail data 106 is sent to the circuit 14, the exchange 15 refers to the header of the electronic mail data 106, and sends the electronic mail data 106 to the host computer 23 of the relay device 22.

FIGS. 5A, 5B, and 5C show an example of electronic mail data transmitted through the PHS network 12.

As described above, FIG. 5A schematically shows the electronic mail data 106 which is sent from the sender's terminal 16A via the base station 20A to the circuit 14 of the PHS network 12. It is assumed that data depending on the communication infrastructure, such as a physical address and communication negotiations, inserted in the header are omitted for the sake of brevity. The electronic mail data 106 sent from the sender's terminal 16A, i.e., the sender, to the relay device 22 is composed of the electronic mail body data 104 including the destination (receiver), the sender, and the mail text, and the display format bits 101 added to the electronic mail body data 104. Details of data shown in FIGS. 5B and 5C will be described later on.

The relay device 22 performs a predetermined processing operation in step S3.

Specifically, the host computer 23 of the relay device 22 refers to the display format bits 101 contained in the electronic mail data 106 from the sender's terminal 16A, accesses the advertisement database 24, and extracts advertisement data which comprises image data matching the display format represented by the display format bits 101.

The host computer 23 then adds extracted advertisement data 108 (see FIG. 5B) to the electronic mail data 106, thus generating new electronic mail data (also referred to as "combined electronic mail data") 110. The host computer 23 sends the new electronic mail data 110 to the circuit 14 for transmission to the receiver's terminal 16B.

As shown in FIG. 5B, the advertisement data 108 may be arranged to contain a moving image, a still image, characters, symbols, and/or a banner advertisement.

In the electronic mail data 106, 110 shown in FIGS. 5A and 5B, the mail text of the electronic mail body data 104 should preferably be encrypted so that it cannot be read by the relay device 22.

The relay device 22 also generates, in addition to the electronic mail data 110 shown in FIG. 5B, electronic mail data 112 including the display format bits 101 and advertisement data 108 only and having the sender's terminal 16A as its destination. The electronic mail data 112 may also contain the electronic mail body data 104 in addition to the display format bits 101 and the advertisement data 108.

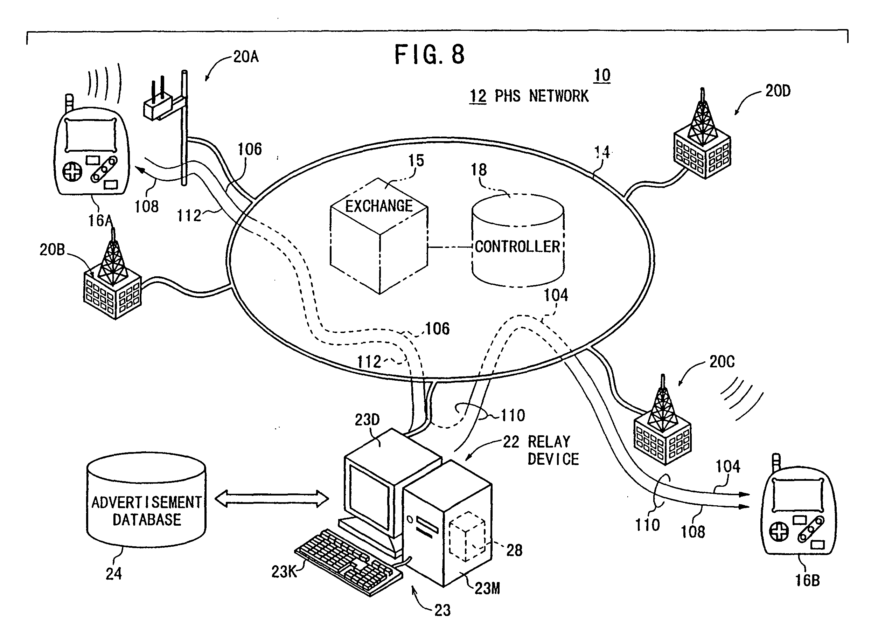

In step S4, the relay device 22 sends the electronic mail data. Specifically, as shown in FIG. 8, when the relay device 22 sends the electronic mail data 110 including the advertisement data 108 to the circuit 14, the exchange 15 refers to the controller 18, confirms the location of the receiver's terminal 16B, and sends the combined electronic mail data 110, which comprises the electronic mail body data 104, the advertisement data 108, and the display format bits 101, as a radio wave via the base station 20C to the receiver's terminal 16B.

At the same time, while the sender's terminal 16A is being connected to the circuit 14 for electronic mail transmission, the relay device 22 sends the electronic mail data 112 including the advertisement data 108 via the circuit 14 as a radio wave from the base station 20A to the sender's terminal 16A.

After having sent these electronic mail data, the relay device 22 is disconnected from the circuit 14.

Although not shown for the sake of brevity, the electronic mail data are actually sent via mail servers to the sender's/receiver's terminals 16A, 16B.

In step S5, the combined electronic mail data 110 is received by the antenna 64B of the receiver's terminal 16B, and supplied via the antenna sharing unit 66B and the receiver 54B to the controller 40B in which the combined electronic mail data 110 is stored in the memory 42B. The controller 40B controls the speaker 46B to announce the reception of the combined electronic mail data 110, and also controls the display unit 48B to display information represented by the combined electronic mail data 110.

For displaying the information represented by the combined electronic mail data 110, the controller 40B refers to the display format bits 101 in the combined electronic mail data 110 to determine the display format for the attached advertisement data 108, converts the advertisement data 108 into image data matching the display format (stored in the memory 42B) of the display unit 48B of the receiver's terminal 16B, and displays the image data on the display unit 48B. The controller 40B converts the advertisement data 108 into image data by interpolating or decimating the advertisement data 108, for example. In this manner, the receiver's terminal 16B determines the display format bits 101 to display an image that matches the display format of the display unit 48B of the receiver's terminal 16B.

If the display units 48 of the terminals 16, i.e., the sender's terminal 16A and the receiver's terminal 16B, used in the electronic mail advertisement system 10 have one display format, then since no display format is required to be determined, the display format bits 101 do not need to be stored and attached.

The electronic mail data 112 is received by the antenna 64A of the sender's terminal 16A, and supplied via the antenna sharing unit 66A and the receiver 54A to the controller 40A in which the electronic mail data 112 is stored in the memory 42A. The controller 40A controls the speaker 46A to announce the reception of the electronic mail data 112, and also controls the display unit 48A to display information represented by the electronic mail data 112.

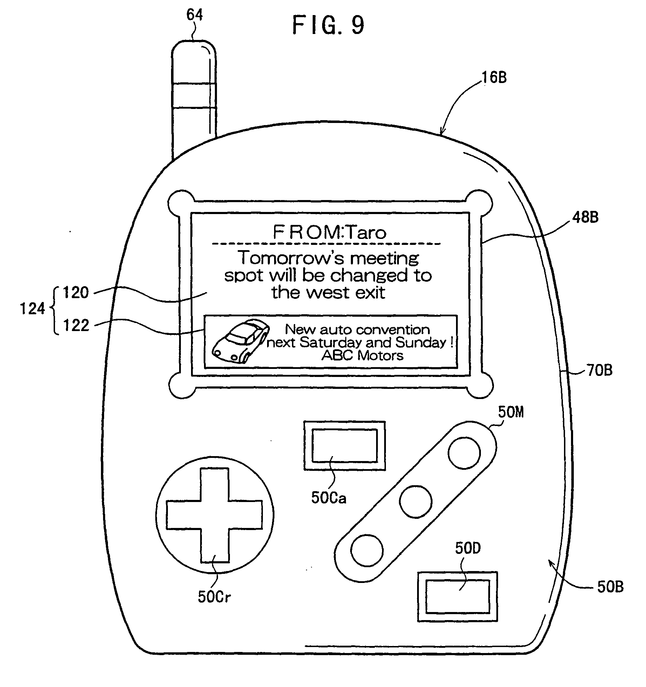

Specific examples of displayed images will be described below. As shown in FIG. 9, the display unit 48B of the receiver's terminal 16B displays an image 124 including a message 120 "FROM: Taro Tomorrow's meeting spot will be changed to the west exit" corresponding to the electronic mail body data 104, an advertisement message 122 "New auto convention next Saturday and Sunday ! ABC Motors" together with an automobile icon corresponding to the advertisement data 108.

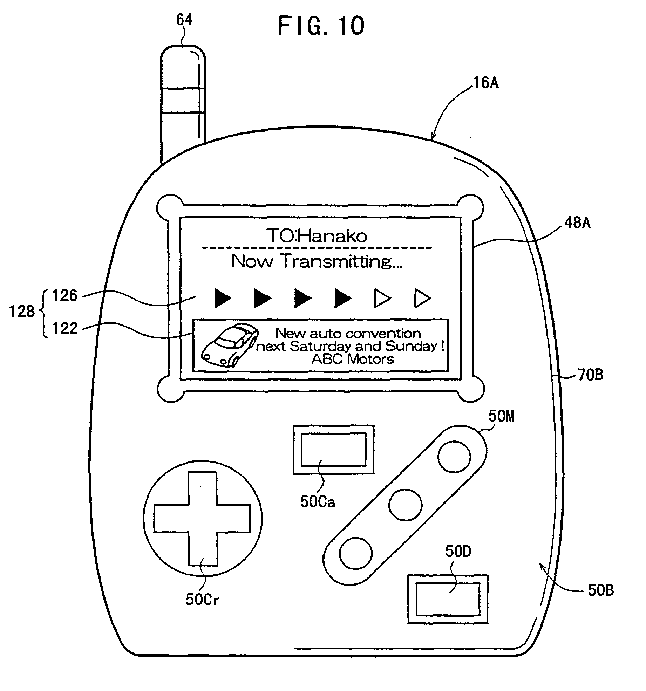

As shown in FIG. 10, the display unit 48A of the sender's terminal 16A displays an image 128 including a message 126 "TO: Hanako Now Transmitting ···" corresponding to the header (not shown), together with a transmission progress rate indicator in the form of a plurality of (six in FIG. 10) uniformly directed triangular marks, four of which are highlighted to indicate a transmission progress rate of 4/6, and the advertisement message 122 together with an automobile icon corresponding to the advertisement data 108.

From the displayed images 124, 148 shown in FIGS. 9 and 10, the sender and the receiver can understand the contents of the electronic mail and also see the advertisement message 122 displayed in combination with the electronic mail that is highly noticeable.

If the advertisement message 122 is displayed based on banner advertisement data, then the sender or the receiver can operate the command unit 50 (50A, 50B) for a mouse click to access the home page of the advertiser, which is linked to the advertisement message 122, via the circuit 14, and can download detailed data of the home page, in step S6. Therefore, the user of the sender's/receiver's terminal 16 can obtain detailed information of the advertisement message 122.

In the electronic mail advertisement system 10 shown in FIG. 1, one relay device 22 is connected to the circuit 14. However, a plurality of relay devices 22 may be connected to the circuit 14. If a plurality of relay devices 22 is connected to the circuit 14, then the sender's/receiver's terminals 16 use the closest ones of the relay devices 22.

In the electronic mail advertisement system 10 shown in FIG. 1, furthermore, the relay device 22 is connected as a new communication infrastructure to the circuit 14. However, the relay device 22 may be integrally combined with or additionally connected to each of the base stations 20 or a certain one of the base stations 20 or the exchange 15 or the controller 18 that is part of the existing communication infrastructure, which is the PHS network 12 in the embodiment shown in FIG. 1. If the existing communication infrastructure comprises a mobile communication network of mobile telephone terminals, then the relay device 22 may also be integrally combined with or additionally connected to each or a certain one of the base stations or a mobile communication exchange.

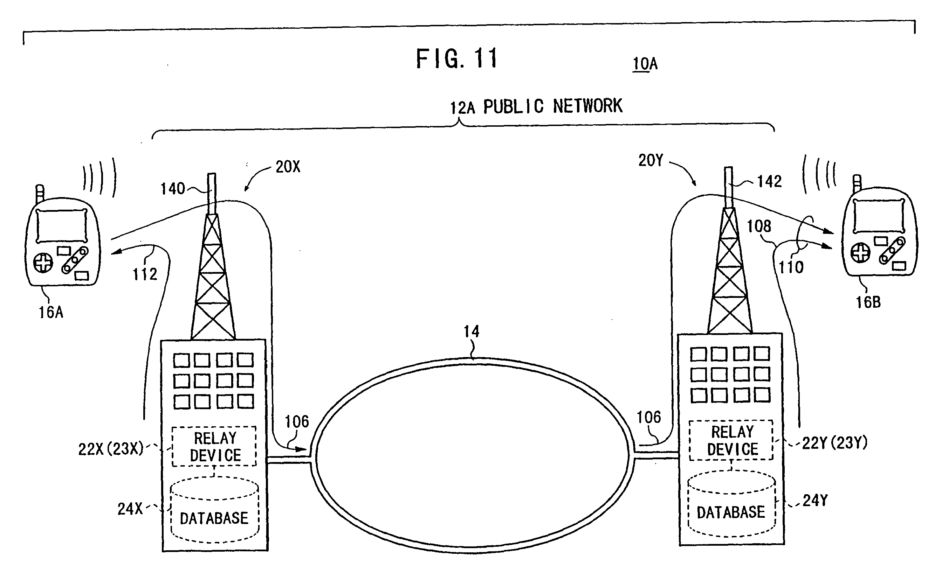

FIG. 11 schematically shows an electronic mail advertisement system 10A according to another embodiment of the present invention. In FIG. 11, the electronic mail advertisement system 10A uses a public network 12A such as a PHS network or a mobile communication network of mobile telephone terminals, which includes a circuit 14 and base stations 20X, 20Y connected thereto. The base stations 20X, 20Y incorporate integrally therein respective relay devices 22X, 22Y including respective host computers 23X, 23Y connected to respective advertisement databases 24X, 24Y.

The electronic mail advertisement system 10A operates as follows: When electronic mail data 106 (see FIG. 5A) comprising electronic mail body data 104 and display format bits 101 is sent as a radio wave from the sender's terminal 16A, the base station 20X receives the electronic mail data 106 via an antenna 140, and the relay device 22X of the base station 20X accesses the advertisement database 24X, and sends electronic mail data 112 comprising advertisement data 108 corresponding to the display format bits 101 via the antenna 140 to the sender's terminal 16A.

The electronic mail data 106 received by the base station 20A is sent via the circuit 14 of the public network 12A to the base station 20Y. The base station 20Y refers to the display format bits 101 in the electronic mail data 106, accesses the advertisement database 24Y, extracts advertisement data 108 corresponding to the display format bits 101, and sends electronic mail data 110 (see FIG. 5B) comprising the electronic mail body data 104 and the advertisement data 108 added thereto as a radio wave via an antenna 142 to the receiver's terminal 16B.

With the electronic mail advertisement system 10A shown in FIG. 11, the electronic mail data 110 including the advertisement data 108 does not pass through the circuit 14, but the electronic mail data 106 including only the display format bits 101 passes through the circuit 14. Accordingly, no undue burden is likely to be imposed on the circuit 14.

Each of the electronic mail advertisement systems 10, 10A shown in FIGS. 1 and 11 comprises the sender's/receiver's terminals 16 as terminals dedicated for electronic mail and the public network 12 such as a PHS network. However, the sender's/receiver's terminals 16 are not limited to such terminals dedicated for electronic mail, but may comprise desired terminals with a display screen, such as portable telephone terminals, PHS terminals, or pagers connected to the public networks 12, 12A.

Each of the public networks 12, 12A may comprise, other than the portable telephone network or the PHS network, an analog public circuit network (conventional telephone network), an ISDN, a cable network, a satellite circuit, or any other public network.

In the above embodiments, the transmission of electronic mail from one terminal 16A of the sender to one terminal 16B of the receiver. The present invention is also applicable to the transmission of electronic mail from terminal of the sender to a plurality of receiver's terminals.

In the above embodiments, electronic mail is transmitted unidirectionally from the terminal 16A of the sender to the terminal 16B of the receiver. However, the present invention is also applicable to a bidirectional real-time communication advertisement system in which the sender and the receiver exchange at least image data bidirectionally therebetween in video telephone or video conference.

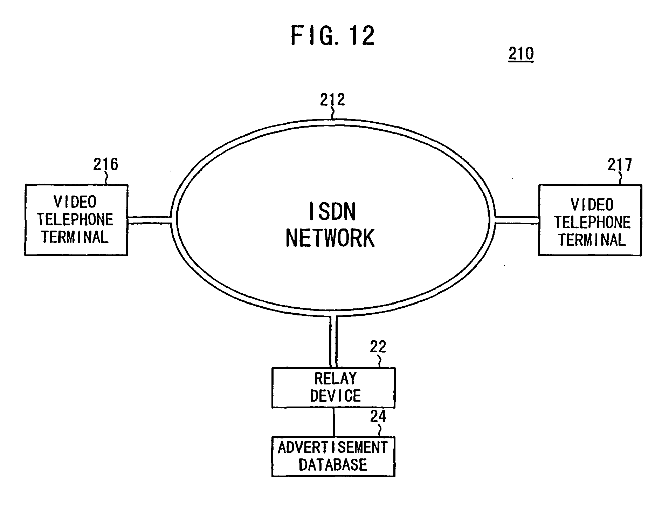

FIG. 12 shows in block form a bidirectional real-time communication advertisement system 210 according to an embodiment of the present invention. The bidirectional real-time communication advertisement system 210 has video telephone terminals 216, 217 connected to an ISDN network 212 as a public network, and a relay device 22 for accessing an advertisement database 24, the relay device 22 being connected to the ISDN network 212.

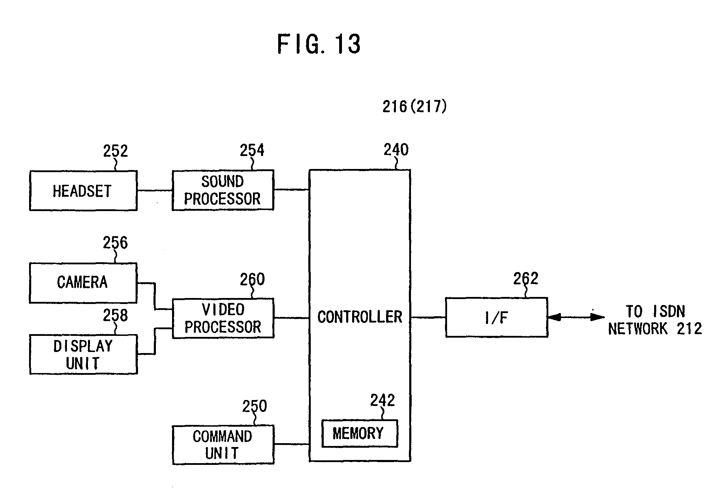

As shown in FIG. 13, each of the video telephone terminals 216, 217 comprises a controller 240 comprising a microcomputer which includes an MPU corresponding to a CPU and a memory 242 as a nonvolatile memory means such as a flash memory.

To the controller 240, there are connected, as human interfaces, a command unit 250 having dial switches including a ten-key pad and a power supply switch, a sound processor 254 for encoding and decoding sound data, the sound processor 254 being connected to a headset 252 having a microphone and a speaker, and a video processor 260 for encoding and decoding video data, the video processor 260 being connected to a video camera 256 and a display unit 258. The controller 240 is connected to the ISDN network 212 via an interface 262 which comprises an I interface and a DSU.

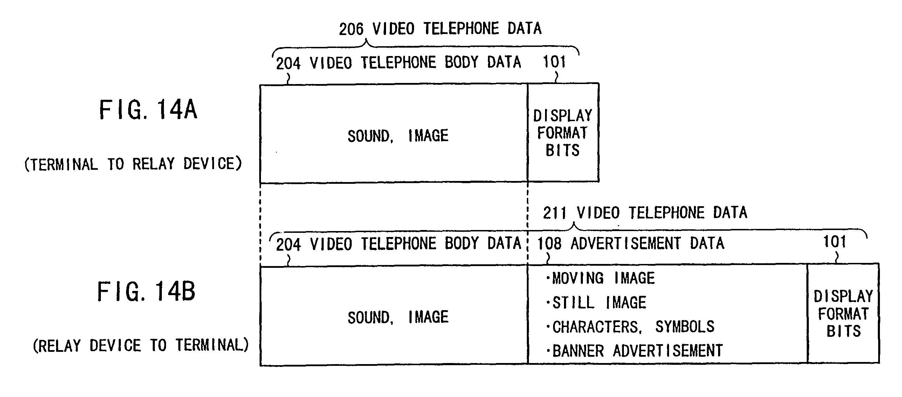

The bidirectional real-time communication advertisement system 210 operates as follows: After a link is established through the ISDN network 212, i.e., after a call is connected, the video telephone terminal 216 (or 217) generates video telephone body data 204 comprising sound data and image data, as shown in FIG. 14A, adds display format bits 101 = "11" representing an NTSC display format (see FIG. 7) to the video telephone body data 204, and sends the combined data as video telephone data 206 to the ISDN network 212.

The relay device 22 refers to the display format bits 101, accesses the advertisement database 24, and extracts advertisement data 108 corresponding to the display format bits 101 from the advertisement database 24. As shown in FIG. 14B, the relay device 22 sends video telephone data 211 comprising the video telephone body data 204, the advertisement data 108, and the display format bits 101 via the ISDN network 212 to the other video telephone terminal 217 (or 216).

The bidirectional real-time communication advertisement system 210 allows the users of the video telephone terminals 216, 217 to see an image represented by the video telephone body data 204, e.g., the face of the other party, together with a moving image, a still image, characters, symbols, and/or a banner advertisement, on the display units 258.

The bidirectional real-time communication advertisement system 210 shown in FIG. 12 may have a plurality of relay devices 22. With the plural relay devices 22 used, the burden on the communication circuit of the ISDN network 212 can be reduced because the video telephone terminals 216, 217 use the closest ones of the relay devices 22.

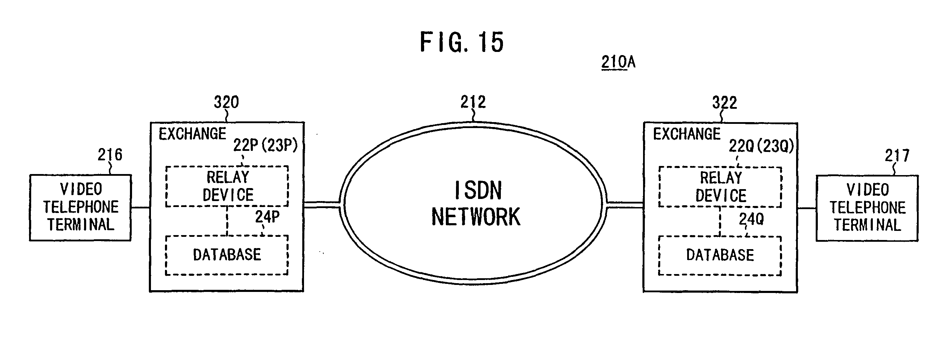

FIG. 15 shows in block form a bidirectional real-time communication advertisement system 210A according to another embodiment of the present invention. In FIG. 15, the bidirectional real-time communication advertisement system 210A includes exchanges 320, 322 connected to the ISDN network 212 and incorporating integrally therein respective relay devices 22P, 22Q including respective host computers 23P, 23Q connected to respective advertisement databases 24P, 24Q. The exchange 320 is connected between the video telephone terminal 216 and the ISDN network 212, and the exchange 322 is connected between the video telephone terminal 217 and the ISDN network 212.

The bidirectional real-time communication advertisement system 210A operates as follows: When video telephone data 206 (see FIG. 14A) comprising video telephone body data 204 and display format bits 101 are sent respectively from the video telephone terminals 216, 217, the video telephone data 206 are delivered via the ISDN network 212 to the respective exchanges 320, 322 which handle the video telephone terminals 216, 217, respectively.

Stated otherwise, the video telephone data 206 from the video telephone terminal 216 is sent via the exchange 320 and the ISDN network 212 to the exchange 322, and the video telephone data 206 from the video telephone terminal 217 is sent via the exchange 322 and the ISDN network 212 to the exchange 320.

The relay device 22Q in the exchange 322 which handles the video telephone terminal 217 determines a display format from the display format bits 101 in the video telephone data 206 from the video telephone terminal 216, extracts advertisement data 108 according to the determined display format from the advertisement database 24Q, and generates video telephone data 211 which comprises the video telephone body data 204, the advertisement data 108, and the display format bits 101, as shown in FIG. 14B. The generated video telephone data 211 is sent from the exchange 322 to the video telephone terminal 217.

The relay device 22P in the exchange 320 which handles the video telephone terminal 216 determines a display format from the display format bits 101 in the video telephone data 206 from the video telephone terminal 217, extracts advertisement data 108 according to the determined display format from the advertisement database 24P, and generates video telephone data 211 which comprises the video telephone body data 204, the advertisement data 108, and the display format bits 101, as shown in FIG. 14B. The generated video telephone data 211 is sent from the exchange 320 to the video telephone terminal 216.

Since the video telephone terminals 216, 217 use the closest relay devices 22P, 22Q, the burden on the communication circuit of the ISDN network 212 is reduced.

In the embodiments according to the present invention, it is possible display an advertisement image together with an image which is highly noticeable to the user, such as an electronic mail message, a video telephone image, or the like. Because the displayed advertisement image is highly probably viewed by the user, the advertiser is given the opportunity to use an advertisement medium that is highly cost-effective.

The service provider of the electronic mail advertisement system 10 can obtain an advertisement income, each user can expect the fixed charge per month and the access charge (communication charge) to be lowered or eliminated. Consequently, the present invention can contribute highly to the widespread use of the existing electronic mail system among the general public.

The bidirectional real-time communication advertisement system 210 allows the owner of the relay device 22 to obtain an advertisement income, and also allows the owner of the ISDN network 212 to receive more payments for communication charges commensurate with the advertisement income. It is highly likely for the bidirectional real-time communication advertisement system 210 to create new businesses including wider use of video telephone terminals.

According to the present invention, as described above, advertisement data is added to and sent together with electronic mail that is highly noticeable to the user, by the relay device connected to the public network. Therefore, the advertisement data is highly probably viewed by the user, and the advertiser is given the opportunity to use an advertisement medium that is highly cost-effective.

Furthermore, in the real-time communication advertisement system which transmits at least image data bidirectionally in a video telephone system, for example, advertisement data is added to and sent together with the image data by the relay device connected to the public network. Consequently, the advertisement data is highly probably viewed by the user, and the advertiser is given the opportunity to use an advertisement medium that is highly cost-effective.

Although certain preferred embodiments of the present invention have been shown and described in detail, it should be understood that various changes and modifications may be made therein without departing from the scope of the appended claims.

## Claims

1. An electronic mail advertisement system comprising:
a public network (12, 14);
a sender's terminal (16A) for generating, displaying and sending electronic mail;
at least one receiver's terminal (16B) for receiving and displaying electronic mail sent from said sender's terminal (16A);
a database (24); and
a relay device (22) connected to said public network, for accessing said database (24), adding advertisement data (108) from said database (24) to electronic mail data (104) sent from said sender's terminal (16A), and sending the electronic mail data (104) to said receiver's terminal (16B);
wherein said sender's terminal comprises means for adding display format information (101) of the sender's terminal to said electronic mail data (104), and sending said electronic mail data (104) and the display format information (101) added thereto as electronic mail data (106) with the display format information, and said relay device comprises means for extracting advertisement data depending on said display format information from said database and means for sending said advertisement data (108) to said sender's terminal.

2. An electronic mail advertisement system according to claim 1, wherein said relay device is operable to send said electronic mail data and the advertisement data (108) added thereto to said receiver's terminal (16B).

3. An electronic mail advertisement system according to claim 1 or claim 2, wherein said means for sending said advertisement data to said sender's terminal (16A) is operable to send said advertisement data (108) while said sender's terminal (16A) is being connected to said public network for sending electronic mail.

4. An electronic mail advertisement system according to any one of claims 1 to 3, wherein said relay device (22) comprises means for sending the electronic mail data (104) to said sender's terminal (16A) with said advertisement data while said sender's terminal (16A) is being connected to said public network for sending electronic mail.

5. An electronic mail advertisement system according to claim 1 in which a public network (12A, 14) has a plurality of base stations (20X, 20Y);
said base stations (20X, 20Y) having respective databases (24X, 24Y) and relay devices (22X, 22Y) for accessing said databases (24X, 22Y), respectively;
said base station (20X) which handles said sender's terminal having means for sending electronic mail data (104) sent from sender's terminal via said public network to the base station which handles said receiver's terminal;
said relay device (22Y) of the base station which handles said receiver's terminal having means for adding advertisement data (108) from the database (24Y) to said electronic mail data (104) and sending said electronic mail data (104) and the advertisement data (108) added thereto from said base station (20Y) which handles said receiver's terminal to said receiver's terminal.

6. An electronic mail advertisement system according to claim 5, wherein said relay device (22X) of the base station which handles said sender's terminal having means for sending either said electronic mail data and the advertisement data added thereto or the advertisement data to said sender's terminal.

7. An electronic mail advertisement system according to claim 5, wherein said sender's terminal comprises means for adding display format information (101) of the sender's terminal to said electronic mail data (104), and sending said electronic mail data (104) and the display format information (101) added thereto as electronic mail data (106) with the display format information, and each of said relay devices (22X, 22Y) comprises means for extracting advertisement data depending on said display format information from the corresponding database.

8. An electronic mail advertisement system according to claim 6, wherein said sender's terminal comprises means for adding display format information (101) of the sender's terminal to said electronic mail data (104), and sending said electronic mail data (104) and the display format information (101) added thereto as electronic mail data (106) with the display format information, and each of said relay devices (22X, 22Y) comprises means for extracting advertisement data depending on said display format information from the corresponding database.

9. A relay device (22) connected to a public network (12, 14), for accessing a database (24) comprising:
means for accessing said database (24), adding advertisement data (108) from said database (24) to electronic mail data (104) sent from said sender's terminal and sending said electronic mail data to said receiver's terminal;
means for extracting advertisement data from said database depending on display format information received from said sender's terminal with said electronic mail data; and
means for sending said advertisement data to said sender's terminal.

10. A relay device according to claim 9, wherein said sending means is operable to send said advertisement data to said sender's terminal (16A) while said sender's terminal (16A) is being connected to said public network for sending electronic mail.

11. A relay device according to claim 9, comprising means for sending to said receiver's terminal (16B) through said public network, said electronic mail data and at least one of advertisement data and guide information data extracted from said data base.

12. A relay device according to claim 10, wherein said sending means is operable to send said electronic mail data (104) with said advertisement data (108) to said sender's terminal.

## Patentansprüche

1. Elektronisches Mail-Werbesystem, welches umfasst:
ein öffentliches Netzwerk (12, 14);
ein Senderendgerät (16A) zum Erzeugen, Anzeigen und Senden elektronischer Mail; zumindest ein Empfängerendgerät (16B) zum Empfangen und zum Anzeigen elektronischer Mail, welche vom Senderendgerät (16A) gesendet wird;
eine Datenbank (24); und
eine Weiterleiteinrichtung (22), welche mit dem öffentlichen Netzwerk verbunden ist, um auf die Datenbank (24) zuzugreifen, Werbedaten (108) von der Datenbank (24) elektronischen Maildaten (104), welche vom Senderendgerät (16A) gesendet werden, hinzuzufügen, und die elektronischen Maildaten (104) zum Empfängerendgerät (16B) zu senden;
wobei das Senderendgerät eine Einrichtung aufweist, um eine Anzeigeformatinformation (101) des Senderendgeräts den elektronischen Maildaten (104) hinzuzufügen und die elektronischen Maildaten (104) und die hinzugefügte Ansageformatinformation (101) als elektronische Maildaten (106) mit der Anzeigeformatinformation zu senden, und die Weiterleiteinrichtung eine Einrichtung aufweist, um Werbedaten in Abhängigkeit von der Anzeigeformatinformation von der Datenbank zu extrahieren, und eine Einrichtung, um die Werbedaten (108) zum Senderendgerät zu senden.

2. Elektronisches Mail-Werbesystem nach Anspruch 1, wobei die Weiterleiteinrichtung betriebsfähig ist, die elektronischen Maildaten und die hinzugefügten Werbedaten (108) zum Empfängerendgerät (16B) zu senden.

3. Elektronisches Mail-Werbesystem nach Anspruch 1 oder 2, wobei die Einrichtung zum Senden der Werbedaten zum Senderendgerät (16A) betriebsfähig ist, die Werbedaten (108) zu senden, während das Senderendgerät (16A) mit dem öffentlichen Netzwerk verbunden ist, um elektronische Mail zu senden.

4. Elektronisches Mail-Werbesystem nach einem der Ansprüche 1 bis 3, wobei die Weiterleiteinrichtung (22) eine Einrichtung aufweist, um die elektronischen Maildaten (104) zum Senderendgerät (16A) mit den Werbedaten zu senden, während das Senderendgerät (16A) mit dem öffentlichen Netzwerk verbunden ist, um die elektronische Mail zu senden.

5. Elektronisches Mail-Werbesystem nach Anspruch 1, wobei ein öffentliches Netzwerk (12A, 14) mehrere Basisstationen (20X, 20Y) hat;
wobei die Basisstationen (20X, 20Y) entsprechende Datenbanken (24X, 24Y) bzw. Weiterleiteinrichtungen (22X, 22Y) haben, um auf die Datenbanken (24X, 22Y) zuzugreifen;
wobei die Basisstation (20X), welche das Senderendgerät handhabt, eine Einrichtung hat, um elektronische Maildaten (104), welche vom Senderendgerät über das öffentliche Netzwerk gesendet werden, zur Basisstation zu senden, welches das Empfängerendgerät handhabt;
wobei die Weiterleiteinrichtung (22Y) der Basisstation, welche das Empfängerendgerät handhabt, eine Einrichtung hat, um Werbedaten (108) von der Datenbank (24Y) den elektronischen Maildaten (104) hinzuzufügen und die elektronischen Maildaten (104) und die hinzugefügten Werbedaten (108) von der Basisstation (20Y), welche das Empfängerendgerät handhabt, zum Empfängerendgerät zu senden.

6. Elektronisches Mail-Werbesystem nach Anspruch 5, wobei die Weiterleiteinrichtung (22X) der Basisstation, welche das Senderendgerät handhabt, eine Einrichtung hat, um entweder die elektronischen Maildaten und die hinzugefügten Werbedaten oder die Werbedaten zum Senderendgerät zu senden.

7. Elektronisches Mail-Werbesystem nach Anspruch 5, wobei das Senderendgerät eine Einrichtung aufweist, um die Anzeigeformatinformation (101) des Senderendgeräts den elektronischen Maildaten (104) hinzuzufügen, und um die elektronischen Maildaten (104) und die hinzugefügte Anzeigeformatinformation (101) als elektronische Maildaten (106) mit der Anzeigeformatinformation zu senden, und jede der Weiterleiteinrichtungen (22X, 22Y) eine Einrichtung aufweist, um Werbedaten in Abhängigkeit von der Anzeigeformatinformation von der entsprechenden Datenbank zu extrahieren.

8. Elektronisches Mail-Werbesystem nach Anspruch 6, wobei das Senderendgerät eine Einrichtung aufweist, um die Anzeigeformatinformation (101) des Senderendgeräts den elektronischen Maildaten (104) hinzuzufügen, und um die elektronischen Maildaten (104) und die hinzugefügte Anzeigeformatinformation (101) als elektronische Maildaten (106) mit der Anzeigeformatinformation zu senden, und jede der Weiterleiteinrichtungen (22X, 22Y) eine Einrichtung aufweist, um Werbedaten in Abhängigkeit von der Anzeigeformatinformation von der entsprechenden Datenbank zu extrahieren.

9. Weiterleiteinrichtung (22), welche mit einem öffentlichen Netzwerk (12, 14) verbunden ist, um auf eine Datenbank (24) zuzugreifen, welche aufweist:
eine Einrichtung zum Zugreifen auf die Datenbank (24), Hinzufügen von Werbedaten (108) von der Datenbank (24) den elektronischen Maildaten (104), welche vom Senderendgerät gesendet werden, und Senden der elektronischen Maildaten zum Empfängerendgerät;
eine Einrichtung zum Extrahieren von Werbedaten von der Datenbank in Abhängigkeit von der Anzeigeformatinformation, welche vom Senderendgerät mit den elektronischen Maildaten empfangen wird; und
eine Einrichtung zum Senden der Werbedaten zum Senderendgerät.

10. Weiterleiteinrichtung nach Anspruch 9, wobei die Sendeeinrichtung betriebsfähig ist, die Werbedaten zum Senderendgerät (16A) zu senden, während das Senderendgerät (16A) mit dem öffentlichen Netzwerk zum Senden elektronischer Mail verbunden ist.

11. Weiterleiteinrichtung nach Anspruch 9, welche eine Einrichtung aufweist, um zum Empfängerendgerät (16B) über das öffentliche Netzwerk die elektronischen Maildaten und zumindest eines von Werbedaten und Führungsinformationsdaten, welche von der Datenbank extrahiert werden, zu senden.

12. Weiterleiteinrichtung nach Anspruch 10, wobei die Sendeeinrichtung betriebsfähig ist, die elektronischen Maildaten (104) mit den Werbedaten (108) zum Senderendgerät zu senden.

## Revendications

1. Système de publicité par courrier électronique comprenant :
un réseau public (12, 14) ;
un terminal d'émission (16A) pour générer, afficher et envoyer un courrier électronique
au moins un terminal de réception (16B) pour recevoir et afficher un courrier électronique envoyé depuis ledit terminal d'émission (16A) ;
une base de données (24) ; et
un dispositif de retransmission (22) connecté audit réseau public, pour accéder à ladite base de données (24), ajouter des données de publicité (108) provenant de ladite base de données (24) aux données de courrier électronique (104) envoyées depuis ledit terminal d'émission (16A), et envoyer les données de courrier électronique (104) audit terminal de réception (16B) ;
dans lequel ledit terminal d'émission comprend un moyen pour ajouter des informations de format d'affichage (101) du terminal d'émission auxdites données de courrier électronique (104), et envoyer lesdites données de courrier électronique (104) et les informations de format d'affichage (101) ajoutées à celles-ci comme données de courrier électronique (106) avec les informations de format d'affichage, et ledit dispositif de retransmission comprend un moyen pour extraire des données de publicité en fonction desdites informations de format d'affichage de ladite base de données et un moyen pour envoyer lesdites données de publicité (108) audit terminal d'émission.

2. Système de publicité par courrier électronique selon la revendication 1, dans lequel ledit dispositif de retransmission peut être utilisé pour envoyer lesdites données de courrier électronique et les données de publicité (108) ajoutées à celles-ci audit terminal de réception (16B).

3. Système de publicité par courrier électronique selon la revendication 1 ou la revendication 2, dans lequel ledit moyen pour envoyer lesdites données de publicité audit terminal d'émission (16A) peut être utilisé pour envoyer lesdites données de publicité (108) tandis que ledit terminal d'émission (16A) est connecté audit réseau public pour envoyer un courrier électronique.

4. Système de publicité par courrier électronique selon l'une quelconque des revendications 1 à 3, dans lequel ledit dispositif de retransmission (22) comprend un moyen pour envoyer les données de courrier électronique (104) audit terminal d'émission (16A) avec lesdites données de publicité tandis que ledit terminal d'émission (16A) est connecté audit réseau public pour envoyer un courrier électronique.

5. Système de publicité par courrier électronique selon la revendication 1, dans lequel un réseau public (12A, 14) a une pluralité de stations de base (20X, 20Y) ;
lesdites stations de base (20X, 20Y) ayant des bases de données respectives (24X, 24Y) et des dispositifs de retransmission (22X, 22Y) pour accéder auxdites bases de données (24X, 22Y), respectivement ;
ladite station de base (20X) qui gère ledit terminal d'émission ayant un moyen pour envoyer des données de courrier électronique (104) envoyées depuis le terminal d'émission via ledit réseau public à la station de base qui gère ledit terminal de réception ;
ledit dispositif de retransmission (22Y) de la station de base qui gère ledit terminal de réception ayant un moyen pour ajouter des données de publicité (108) provenant de la base de données (24Y) auxdites données de courrier électronique (104) et envoyer lesdites données de courrier électronique (104) et les données de publicité (108) ajoutées à celles-ci depuis ladite station de base (20Y) qui gère ledit terminal de réception audit terminal de réception.

6. Système de publicité par courrier électronique selon la revendication 5, dans lequel ledit dispositif de retransmission (22X) de la station de base qui gère ledit terminal d'émission ayant un moyen pour envoyer soit lesdites données de courrier électronique et les données de publicité ajoutées à celles-ci, soit les données de publicité audit terminal d'émission.

7. Système de publicité par courrier électronique selon la revendication 5, dans lequel ledit terminal d'émission comprend un moyen pour ajouter des informations de format d'affichage (101) du terminal d'émission auxdites données de courrier électronique (104), et envoyer lesdites données de courrier électronique (104) et les informations de format d'affichage (101) ajoutées à celles-ci comme données de courrier électronique (106) avec les informations de format d'affichage, et chacun desdits dispositifs de retransmission (22X, 22Y) comprend un moyen pour extraire des données de publicité en fonction desdites informations de format d'affichage de la base de données correspondante.

8. Système de publicité par courrier électronique selon la revendication 6, dans lequel ledit terminal d'émission comprend un moyen pour ajouter des informations de format d'affichage (101) du terminal d'émission auxdites données de courrier électronique (104), et envoyer lesdites données de courrier électronique (104) et les informations de format d'affichage (101) ajoutées à celles-ci comme données de courrier électronique (106) avec les informations de format d'affichage, et chacun desdits dispositifs de retransmission (22X, 22Y) comprend un moyen pour extraire des données de publicité en fonction desdites informations de format d'affichage de la base de données correspondante.

9. Dispositif de retransmission (22) connecté à un réseau public (12, 14), pour accéder à une base de données (24), comprenant :
un moyen pour accéder à ladite base de données (24), ajouter des données de publicité (108) provenant de ladite base de données (24) à des données de courrier électronique (104) envoyées depuis ledit terminal d'émission et envoyer lesdites données de courrier électronique audit terminal de réception ;
un moyen pour extraire des données de publicité de ladite base de données en fonction d'informations de format d'affichage reçues dudit terminal d'émission avec lesdites données de courrier électronique ; et
un moyen pour envoyer lesdites données de publicité audit terminal d'émission.

10. Dispositif de retransmission selon la revendication 9, dans lequel ledit moyen d'émission peut être utilisé pour envoyer lesdites données de publicité audit terminal d'émission (16A) tandis que ledit terminal d'émission (16A) est connecté audit réseau public pour envoyer un courrier électronique.

11. Dispositif de retransmission selon la revendication 9, comprenant un moyen pour envoyer audit terminal de réception (16B) à travers ledit réseau public, lesdites données de courrier électronique et au moins un élément parmi des données de publicité et des données d'informations de guidage extraites de ladite base de données.

12. Dispositif de retransmission selon la revendication 10, dans lequel ledit moyen d'émission peut être utilisé pour envoyer lesdites données de courrier électronique (104) avec lesdites données de publicité (108) audit terminal d'émission.
